(19) Europäisches Patentamt
European Patent Office
Office européen des brevets

(11) EP 3 673 013 B1

# (12) EUROPEAN PATENT SPECIFICATION

(45) Date of publication and mention of the grant of the patent:
**03.05.2023 Bulletin 2023/18**

(21) Application number: **18756197.2**

(22) Date of filing: **14.08.2018**

(51) International Patent Classification (IPC):
***C08L 23/12*** *(2006.01)*

(52) Cooperative Patent Classification (CPC):
(C-Sets available)
**C08L 23/12;** C08L 2207/02 (Cont.)

(86) International application number:
**PCT/EP2018/072016**

(87) International publication number:
**WO 2019/038134 (28.02.2019 Gazette 2019/09)**

## (54) POLYPROPYLENE COMPOSITION WITH IMPROVED OPTICAL AND IMPACT BEHAVIOUR

POLYPROPYLENZUSAMMENSETZUNG MIT VERBESSERTEN OPTISCHEN UND AUFPRALLEIGENSCHAFTEN

COMPOSITION DE POLYPROPYLÈNE PRÉSENTANT UN MEILLEUR COMPORTEMENT DE PERCUSSION ET OPTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.08.2017 EP 17187028**

(43) Date of publication of application:
**01.07.2020 Bulletin 2020/27**

(73) Proprietor: **Borealis AG**
**1020 Vienna (AT)**

(72) Inventors:
- **GAHLEITNER, Markus**
  **4021 Linz (AT)**
- **WANG, Jingbo**
  **4021 Linz (AT)**
- **BERNREITNER, Klaus**
  **4021 Linz (AT)**

(74) Representative: **Maiwald GmbH**
**Elisenhof**
**Elisenstraße 3**
**80335 München (DE)**

(56) References cited:
**EP-A1- 2 664 650**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 23/12, C08L 23/16**

## Description

The present invention relates to polypropylene compositions combining high flowability and impact strength with acceptable haze and stiffness, additionally showing good stress whitening resistance.

## Background Information

Polypropylenes are widely used in a lot of application areas, like moulding, tubing, pipe, lids, etc. due to their good combination of cost, performance and processability. Nowadays, due to the higher life standards and more strict requirements, specific properties like high flow (energy saving and long flow length for thinner wall) and a good combination of softness, toughness and transparency, in the sense of low haze, become continuously more important.

It is further important, that the polymers provide good optical properties in the sense of low haze and good transparency despite having undergone mechanical deformation. I.e. there is a strong requirement for polypropylene having a low tendency to stress whitening. Such stress whitening marks are highly disturbing the optical performance and impression of injection moulded final articles and should therefore be avoided.

In order to improve the impact behaviour of polypropylene, some rubber phase is required. It is well known in the art, that the rubber phase normally is incompatible with the matrix and therefore the optical properties will deteriorate and result in low transparency, high haze and tendency to stress whitening.

It is further well known in the art, that rubber phases can be incorporated into the polypropylene resulting in a multiphase or heterophasic polymer system. Said incorporation can be done either by in-site polymerisation or by incorporation of an external rubber. It is also well known in the art, that incorporating such external rubber can be expensive. Similarly well-known is the fact, that optimizing costs is a continuous desire in the industry and especially in the packaging industry.

Polymers used in the packaging industry, especially when used for thin walled articles, need good flowability in the sense of a high melt flow rate (MFR), so to allow fast and efficient filling of the mould. However, it is known fact, that an increase of the melt flow rate (MFR) will reduce the molecular weight and therefore mechanical properties in general and impact performance in particular will deteriorate.

The person skilled however is further well aware, that such multiphase systems with stiff matrix and therein dispersed elastomer or core-shell particles are very sensitive to stress whitening or blushing. This is especially true for multiphase systems having high rubber content.

Stress whitening results from internal cavitation on the particle/matrix interface or inside the rubber particles of the polymer. As said cavitation is related to energy dissipation in the failure process it is also clear that stress whitening can hardly be avoided when designing materials combining a high level of toughness with high stiffness. While in case of failure, cracks are stopped and energy is dissipated at internal surfaces, this dissipation goes along with craze formation becoming visible in the deformation zone.

One way to improve the optical properties is to reduce the molecular weight of rubber phase, but this may introduce further problems, namely a reduction of the toughening effect and possible problems during production and conversion due to stickiness of the polymer powder.

Stress whitening on the other side can be compensated by either using rubber phases of higher crystallinity or by addition of a high density polyethylene (HDPE) component. Both approaches are, however, also known to reduce transparency or increase haze repsectively.

Likewise, a reduction in stiffness not always leads to higher impact, but can also result in a stickier polymer.

So it becomes clear that improving a specific property in the context of stiffness/ softness/ impact/ optical behaviour can only be accomplished on the expense of another property.

## Description of the prior art:

US 2006/0178483 A of ExxonMobil claims compositions of (A) 60 - 99 wt.-% of one or more semi-crystalline polymers with 0 - 5 wt.-% of a $\alpha$-olefin comonomer having a melting temperature of 100 - 170 °C and melt flow rate of at most 200g/10min and with (B) 1 - 40 wt.-% of one or more semi-amorphous polymers with 10 - 20 wt.-% alpha-olefin-comonomer having melt enthalpy of 4 - 70 J/g and a melt flow rate of 0.1-200 g/10min.

Also claimed is a film comprising (A) and (B), the blend having an MFR of 0.5 -100 g/10min and resulting in a haze (1 mm) at most 20% and a permanent set above 65%. The application discloses in its examples' section blends based on semi-crystalline polymers with 0 % comonomer content.

US 2004/0087751 A of DOW Chemical covers compositions of (A) at least 20 wt.-% polypropylene having at least 93 wt.-% propylene, a molecular weight distribution of above 3.5, a melt temperature of at least 120 °C and a higher crystallinity than the modifier (Hm(A) > Hm(B)), and a modifier (B) having more than 40 wt.-% of a propylene / $\alpha$-olefin copolymer having with above 60 wt.-% propylene and above 6 wt.-% alpha olefin comonomer, a molecular weight

distriubtion of below 3.5 and a broad composition distribution.

The application discloses that in case component (A) are random copolymers of propylene and alpha-olefin-comonomers, the comonomers of component (A) and (B) should match each other, i.e. be identical. This practically limits the property design.

EP 1889873 describes compositions of (A) propylene-ethylene copolymer with flexural modulus of below 1000 MPa and a melting temperature of below 160 °C and (B) an ethylene-propylene rubber with 80 - 92 wt.-% propylene. The blend having two glass transitions below 0 °C, one of these being at -45 to -5 °C and a PE crystallinity of below 3%.

All the examples are characterised by low flowability of below 10 g/10 min.

EP 2586824 describes a polymer compositions comprising (A) a polypropylene copolymer having below 4.0 wt.-% comonomer being C5 to C12 $\alpha$-olefins, and (B) a propylene copolymer having a comonomer content of 4.0 to 20.0 wt.-%, the comonomers being C5 to C12 $\alpha$-olefins, and (C) a low-crystalline polymer having a melting temperature of below 120 °C, wherein further (i) the weight ratio of the polypropylene (A) to the propylene copolymer (B) is in the range of 20/80 to 80/20, and (ii) preferably the polymer composite comprises 5 to 50 wt.-% based on the total amount of polymer composite of low-crystalline polymer (C). Also here, flowability of the described composites is limited.

## Object of the invention

The present invention is accordingly directed at polypropylene compositions combining high flowability and impact strength with acceptable haze and stiffness, additionally showing good stress whitening resistance.

The present invention is further directed to provide a polypropylene composition having both good impact behaviour, low haze and a low tendency to stress whitening after deformation, in the sense of a high onset angle.

Seen from another view, the present inventions is directed at a polypropylene composition having a low ratio of haze to Charpy impact behaviour (Haze, / NIS+23).

Seen from another view, the present invention is directed at a polypropylene composition having a good weighted impact-haze ratio. (WIH)

In a further aspect of the invention, the present inventors have sought for a polypropylene composition which provides good impact and low haze requiring lower amounts of external rubber components than known from the art.

Alternatively, the present inventors have sought for a polypropylene composition having a pronounced optomechnical softness: Optomechanical softness (OMS) is understood as the ratio of mechanical (especially impact and soft-flexural) behaviour, to optical performance, namely haze, wherein the mechanical properties are targeted to be as high as possible and the optical performance in the sense of haze is desired to be as low as possible.

The optomechanical softness is determined according the formula given below:

$$OMS = \frac{(1000 - Flex\ Modulus\ [MPa]) * NIS\left[\frac{kJ}{m^2}\right]}{Haze\ _1[\%]} \quad (\mathrm{I})$$

So it has been a further object of the present invention to provide a polypropylene composition, which provides a well-balanced softness-impact-haze-behaviour and is resistant to stress whitening caused be excessive deformation without being sticky.

Surprisingly the present inventors have now identified a way to improve softness and impact behaviour of a polypropylene composition by introducing external elastomers or plastomers as impact modifier, which also allow maintaining the optical properties.

The present inventors have identified a polypropylene composition which provides both good impact behaviour and good optical properties, expressed by a low ratio between haze and impact behaviour as well as by a good ratio of weighted impact/haze (WIH)

The present inventors have further identified a polypropylene composition that provides a well-balanced softness-impact-haze-behaviour and can be produced at lower costs than similar products known and has a pronounced optomechanical softness combined with lower sensitivity to stress whitening.

The present inventors have identified a polypropylene composition having a Melt Flow Rate (MFR230/2.16) when measured according to ISO1133 of at least 12.0 - 75.0 g/10 min and comprising

65.0 - 85.0 wt.-% of a first copolymer of propylene and 2.0 - 5.0 wt.-% of a first comonomer (Como1) selected from C4 - C12 alpha olefins, and

15.0 - 35.0 wt.-% of the second copolymer of propylene and 5.0 - 25.0 wt.-% ethylene as a second comonomer, wherein the MFR of the second copolymer (b) is lower than the MFR of the first copolymer (a).

In a preferred embodiment the invention covers moulded articles, such as injection moulded articles, especially

thin walled injection moulded articles like cups or trays for packaging applications, comprising the polypropylene composition of the present invention.

In an alternatively preferred embodiment the invention describes the use of the polypropylene composition of the present invention for producing injection moulded articles, especially thin walled injection moulded articles like cups or trays for packaging applications.

**Detailed description:**

**Polypropylene composition**

The polypropylene composition of the present invention is characterised by having a Melt Flow Rate (MFR230/2.16) when measured according to ISO1133 of at least 12.0 - 75.0 g/10 min and comprising

(a) 65.0 - 85.0 wt.-%, preferably 66.0 - 82.0 wt.-%, or more preferably 70.0 - 80.0 wt.-% of a first copolymer (Copo1) of propylene and 2.0 - 5.0 wt.-% of a first comonomer (Como1) selected from C4 - C12 alpha olefins and
(b) 15.0 - 35.0 wt.-%, preferably 18.0 - 34.0 wt.-%, or more preferably 20.0 - 30.0 wt.-% of a second copolymer (Copo2) of propylene and 5.0 - 25.0 wt.-% of a second comonomer (Como2) being ethylene, wherein the MFR of the second copolymer (b) is lower than the MFR of the first copolymer (a) and

wherein the percentages are based on the sum of the first and the second copolymers together.

It is preferred that the polypropylene composition does not comprise any fractions being polypropylene homopolymers, i.e. polymer fractions comprising solely propylene monomer units.

It is further preferred, that the polypropylene composition of the present invention comprises solely copolymers of propylene and ethylene and C4 - C12 alpha olefins.

It especially preferred, that the polypropylene composition of the present invention consists of a first and a second copolymer as defined above.

It is understood within the invention, that the first copolymer (a) differs from the second copolymer (b). Likewise the first comonomer (Como1) differs from the second comonomer (Como2).

The Melt Flow Rate (MFR230/2.16) of the first copolymer of the present invention may be in the range of 15.0 - 100.0 g/10 min, preferably in the range of 18.0 - 90.0 g/10 min, like more preferably 20.0 - 80.0 g/10 min.

The second copolymer of propylene and ethylene (b) may have a melt flow rate MFR230/2.16 in the range of 5.0 to 50.0 g/10min.

The MFRs of the first (a) and the second (b) copolymer are different, wherein the MFR of the second copolymer (b) is lower than the MFR of the first copolymer (a).

It is further envisaged, that the MFR of the polypropylene composition of the present invention is lower than the MFR of the first copolymer (a).

Accordingly the ratio of the MFR of the polypropylene composition ($MFR_{(comp)}$) to the MFR of the first copolymer (a), $MFR_{(a)}$ may be below 1.0.

$$\frac{MFR_{(comp)}}{MFR_{(a)}} < 1.0 \quad (II)$$

Preferably the ratio of the MFR of the polypropylene composition $MFR_{(comp)}$ to the MFR of the first copolymer (a), $MFR_{(a)}$ may be in the following ranges: $MFR_{(comp)}/MFR_{(a)}$ between 0.50 and 0.95, preferably between 0.60 and 0.90.

Within the scope of the present invention it is understood that "first copolymer" (Copo1) refers to a copolymer of propylene and 2.0 - 5.0 wt.-% of a first comonomer (Como1) selected from C4 - C12 alpha olefins as defined above for component (a).

It is further to be understood, that "second copolymer" (Copo2) refers to a copolymer of propylene and ethylene as a second comonomer as defined above for component (b).

**(a) First copolymer**

The first copolymer is a copolymer of propylene and a first comonomer (Como1).

The first comonomer may be selected from C4-C12 alpha-olefins, preferably from 1-butene, 1-hexene or 1-octene, wherein 1-butene and 1-hexene are especially preferred.

It is further preferred, that the first comonomer is the sole comonomer in the first copolymer.

It is further preferred, that the first copolymer comprises, preferably consists of 1-butene or 1-hexene as sole

first comonomer. 1-hexene as sole comonomer is particularly preferred.

Within this invention it is understood, that the first copolymer does not comprise any comonomer units based on ethylene.

The first copolymer (Copo1) may comprise preferably 2.0 - 5.0 wt.-% of the first comonomer, such as 2.2 - 4.8, like 2.3 - 4.6 wt.-%.

The first copolymer (Copo1) is preferably a random copolymer of propylene and the first comonomer (Como1). The term "random copolymer" has to be preferably understood according to IUPAC (Pure Appl. Chem., Vol. No. 68, 8, pp. 1591 to 1595, 1996).

It is further preferred, that the first copolymer is a random copolymer of propylene and 2.0 - 5.0 wt.-% of a first comonomer selected from 1-butene or 1-hexene, wherein 1-hexene is particularly preferred.

The first copolymer according of the present invention is characterised by a low amount of fractions soluble in cold xylene (XCS). The amount of XCS may be up to 8.0 wt.-%, preferably up to 7.0 wt.-% or more preferably up to 6.0 wt.-%.

The amount of fractions soluble in cold xylene (XCS) may be in the ranges of 0.1 - 7.0 wt.-%, like 2.0 - 6.0 wt.-%.

The first copolymer (a) of the present invention is characterised by a good flowability in the sense of an elevated Melt flow Rate MFR, when determined according to ISO1133 at 230 °C and a loading of 2.16 kg (MFR230/2.16).

The MFR230/2.16 of the first copolymer of the present invention may be in the range of 15.0 - 100 g/10 min, preferably in the range of 18.0 - 90 g/10 min, like more preferably 20.0 - 80.0 g/10 min.

The first copolymer (a) is characterised by a narrow molecular weight distribution (MWD). MWD is determined by the ratio of the average molecular weight (Mw) and the number average molecular weight (Mn), namely Mw/Mn.

The MWD of the first copolymer of the present invention may be at most 5.0 or lower, such as at most 4.0 or lower, like 3.5 or 3.0 or below.

The first copolymer (a) may be further characterised by its melting temperature (Tm). It is appreciated, that the first copolymer (a) has a melting temperature of at most 145 °C, such as below 140 °C. It is preferred, if the melting point of the first copolymer (a) lies in the range of 120 - 145 °C, like in the range of 125 - 140 °C, more preferably in the range of 128 - 138 °C.

In a preferred embodiment the first copolymer has been produced in the presence of metallocene catalyst, preferably in the presence of a metallocene catalyst as defined further below.

**(b) Second copolymer**

The polypropylene composition of the present invention comprises from 15.0 - 35.0 wt.-%, preferably 18.0 - 34.0 wt.-%, or more preferably 20.0 - 30.0 wt.-% of a second copolymer (Copo2) of propylene and ethylene as a second comonomer (Como2), The percentages are based to the sum of the first and the second copolymers together.

The second copolymer (Copo2) comprises propylene and ethylene as the second comonomer. Preferably ethylene is the sole comonomer in the second copolymer. Accordingly the second copolymer may consist of only propylene and ethylene monomer units.

Different to the first copolymer (a), the second copolymer of propylene and ethylene (b) is featured by rather low crystallinity. The second copolymer (b) may have a rather low melting temperature. Accordingly the the second copolymer of propylene and ethylene (b) according to this invention has a melting temperature of below 120 °C, preferably below 110 °C, more preferably below 100 °C, still more preferably in the range of 25 to below 120 °C, yet more preferably in the range of 35 to 110 °C, still yet more preferably in the range 50 to 100 °C.

Further, the the second copolymer of propylene and ethylene (b) preferably has a crystallinity as measured by its melting enthalpy (by DSC) of not more than 40 %, more preferably in the range of 5 to 40, yet more preferably in the range of 5 to 35%, still more preferably in the range of 5 to 30 %, still yet more preferably in the range of 5 to 25 %.

In one preferred embodiment the second copolymer of propylene and ethylene (b) has a low heat of fusion (Hf). Thus it is preferred that the second copolymer of propylene and ethylene (b) has a low heat of fusion (Hf) of not more than 60 J/g, more preferably of not more than 50 J/g, still more preferably in the range of 5 to 60 J/g, yet more preferably in the range of 5 to 50 J/g, still yet more preferably in the range of 10 to 50 J/g.

Furthermore, the second copolymer of propylene and ethylene (b) has preferably a density in the range of 850 to 890 $kg/m^3$, yet more preferably in the range of 855 to 885 $kg/m^3$.

In a preferred embodiment, the second copolymer of propylene and ethylene (b) has a melt flow rate MFR230/2.16 in the range of 5 to 50 g/10min. More preferably, the second copolymer of propylene and ethylene (b) has a melt flow rate MFR230/2.16 in the range of 7.0 to 45.0 g/10min, more preferably in the range of 8.0 to 40.0 g/10min.

Furthermore the second second copolymer of propylene and ethylene (b) is characterised by a glass transition temperature of below 0 °C, namely in the range of (-45) °C up to (-5) °C.

Preferably the glass transition temperature of the second copolymer of propylene and ethylene (b) may be in the range of (-42) °C up to (-7) °C, more preferably in the range of (-40) °C to (-15) °C.

The second copolymer of propylene and ethylene (b) has preferably and ethylene content, of 5.0 to equal or below 25.0 wt.-%, more preferably 6.0 to 22.0 wt.-%, like 7.0 to 20.0 wt.-%.

Preferably the second copolymer of propylene and ethylene (b) according to this invention has been produced in the presence of a metallocene catalyst.

Furthermore the second copolymer of propylene and ethylene (b) of the present invention may be characterized by a narrow molecular weight distribution. Preferably the molecular weight distribution (MWD) of the second copolymer of propylene and ethylene (b) is at most 5.0 or lower, such as at most 4.0 or lower, like 3.5 or 3.0 or below.

In a special embodiment the second copolymer of propylene and ethylene is characterised by an ethylene content of 5.0 - 25.0 wt.-%, a density of 850 - 890 kg/$m^3$, a MFR230/2.16 of 5.0 - 50.0 g/10 min a molecular weight distribution (MWD) of at most 5.0 or lower and a glass transition temperature (Tg) in the range of (- 45 °C) to (- 5 °C).

Copolymers as described for the second copolymer of propylene and ethylene (b) according to this invention are known in the art. Typical commercial products are the Vistamaxx polypropylene grades of Exxon Mobil, Versify polypropylene grades of Dow, or Tafmer polypropylene grades from Mitsui Chemicals.

In one preferred embodiment the second copolymer of propylene and ethylene (b) is a Vistamaxx grade of Exxon Mobil.

In a preferred embodiment, both the first and the second copolymers (a) and (b) of the present invention - independently of each other - may be selected to provide narrow molecular weight distributions.

It is appreciated that both the first and the second copolymers (a) and (b) of the present invention have - independently of each other - a MWD of 5.0 or below, like 4.0 or below, such as 3.5 or 3.0 or below.

It is alternatively preferred, that both the first and the second copolymers (a) and (b) of the present invention have been produced in the presence of a metallocene catalyst or a metallocene catalyst system.

Furthermore it is preferred that both the first and the second copolymers (a) and (b) of the present invention have - independently of each other - a narrow molecular weight distribution MWD of 5.0 or below and have been produced in the presence of a metallocene catalyst or a metallocene catalyst system.

Additives:

The polymer composite may contain additives known in the art, like antioxidants,
nucleating agents, slip agents and antistatic agents. Typically the composite may contain not more than 7.0 wt.-%, yet more preferably not more than 5.0 wt.-%, like not more than 2.5 wt.-% of additives mentioned herein.

**Catalyst:**

A catalyst system for performing the polymerisation should be chosen to produce a polypropylene random copolymer characterised by both providing a narrow molecular weight distribution (MWD) and low amounts of fractions soluble in cold xylene

A suitable catalyst system is a solid catalyst system, wherein said solid catalyst system (SCS) comprises

(i) a transition metal compound of formula (III)

$$Rn(Cp')_2MX_2 \qquad (III)$$

wherein

"M" : is zirconium (Zr) or hafnium (Hf),
each "X" : is independently a monovalent anionic σ-ligand,
each "Cp' " : is a cyclopentadienyl-type organic ligand independently selected from the group consisting of substituted cyclopentadienyl, substituted indenyl, substituted tetrahydroindenyl, and substituted or unsubstituted fluorenyl, said organic ligands coordinate to the transition metal (M),
"R" : is a bivalent bridging group linking said organic ligands (Cp'),
"n" : is 1 or 2, preferably 1, and

(ii) optionally a cocatalyst (Co) comprising an element (E) of group 13 of the periodic table (IUPAC), preferably a cocatalyst (Co) comprising a compound of Al.

In one specific embodiment the solid catalyst system (SCS) has a porosity measured according ASTM 4641

of less than 1.40 ml/g and/or a surface area measured according to ASTM D 3663 of lower than 25 $m^2$/g.

Preferably the solid catalyst system (SCS) has a surface area of lower than 15 $m^2$/g, yet still lower than 10 $m^2$/g and most preferred lower than 5 $m^2$/g, which is the lowest measurement limit. The surface area according to this invention is measured according to ASTM D 3663 (N2).

Alternatively or additionally it is appreciated that the solid catalyst system (SCS) has a porosity of less than 1.30 ml/g and more preferably less than 1.00 ml/g. The porosity has been measured according to ASTM 4641 (N2). In another preferred embodiment the porosity is not detectable when determined with the method applied according to ASTM 4641 (N2).

Furthermore the solid catalyst system (SCS) typically has a mean particle size of not more than 500 μm, i.e. preferably in the range of 2 to 500 μm, more preferably 5 to 200 μm. It is in particular preferred that the mean particle size is below 80 μm, still more preferably below 70 μm. A preferred range for the mean particle size is 5 to 70 μm, or even 10 to 60 μm.

As stated above the transition metal (M) is zirconium (Zr) or hafnium (Hf), preferably zirconium (Zr).

The term "σ-ligand" is understood in the whole description in a known manner, i.e. a group bound to the metal via a sigma bond. Thus the anionic ligands "X" can independently be halogen or be selected from the group consisting of R', OR', SiR'3, OSiR'3, OSO2CF3, OCOR', SR', NR'2 or PR'2 group wherein R' is independently hydrogen, a linear or branched, cyclic or acyclic, C1 to C20 alkyl, C2 to C20 alkenyl, C2 to C20 alkynyl, C3 to C12 cycloalkyl, C6 to C20 aryl, C7 to C20 arylalkyl, C7 to C20 alkylaryl, C8 to C20 arylalkenyl, in which the R' group can optionally contain one or more heteroatoms belonging to groups 14 to 16.

In a preferred embodiments the anionic ligands "X" are identical and either halogen, like Cl, or methyl or benzyl.

A preferred monovalent anionic ligand is halogen, in particular chlorine (Cl).

The substituted cyclopentadienyl-type ligand(s) may have one or more substituent(s) being selected from the group consisting of halogen, hydrocarbyl (e.g. C1 to C20 alkyl, C2 to C20 alkenyl, C2 to C20 alkynyl, , C3 to C20 cycloalkyl, like C1 to C20 alkyl substituted C5 to C20 cycloalkyl, C6 to C20 aryl, C5 to C20 cycloalkyl substituted C1 to C20 alkyl wherein the cycloalkyl residue is substituted by C1 to C20 alkyl, C7 to C20 arylalkyl, C3 to C12 cycloalkyl which contains 1, 2, 3 or 4 heteroatom(s) in the ring moiety, C6 to C20-heteroaryl, C1 to C20-haloalkyl, -SiR"3 , -SR", -PR"2 or-NR"2, each R" is independently a hydrogen or hydrocarbyl (e.g. C1 to C20 alkyl, C1 to C20 alkenyl, C2 to C20 alkynyl, C3 to C12 cycloalkyl, or C6 to C20 aryl) or e.g. in case of -NR"2, the two substituents R" can form a ring, e.g. five- or six-membered ring, together with the nitrogen atom wherein they are attached to.

Further "R" of formula (III) is preferably a bridge of 1 to 4 atoms, such atoms being independently carbon (C), silicon (Si), germanium (Ge) or oxygen (O) atom(s), whereby each of the bridge atoms may bear independently substituents, such as C1 to C20-hydrocarbyl, tri(C1 to C20-alkyl)silyl, tri(C1 to C20-alkyl)siloxy and more preferably "R" is a one atom bridge like e.g. -SiR'''2-, wherein each R is independently C1 to C20-alkyl, C2 to C20-alkenyl, C2 to C20-alkynyl, C3 to C12 cycloalkyl, C6 to C20-aryl, alkylaryl or arylalkyl, or tri(C1 to C20 alkyl)silyl- residue, such as trimethylsilyl-, or the two R''' can be part of a ring system including the Si bridging atom.

In a preferred embodiment the transition metal compound has the formula (IV)

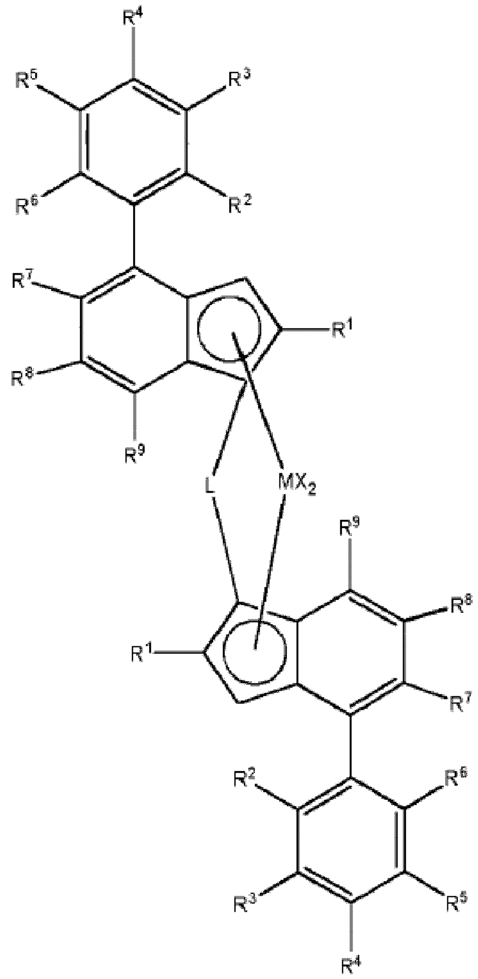

(IV)

wherein

M : is zirconium (Zr) or hafnium (Hf), preferably zirconium (Zr),
X : are ligands with a σ-bond to the metal "M", preferably those as defined above for formula (IV), preferably chlorine (Cl) or methyl (CH3), the former especially preferred,
$R^1$: are equal to or different from each other, preferably equal to, and are selected from the group consisting of linear saturated C1 to C20 alkyl, linear unsaturated C1 to C20 alkyl, branched saturated C1-C20 alkyl, branched unsaturated C1 to C20 alkyl, C3 to C20 cycloalkyl, C6 to C20 aryl, C7 to C20 alkylaryl, and C7 to C20 arylalkyl, optionally containing one or more heteroatoms of groups 14 to 16 of the Periodic Table (IUPAC), preferably are equal to or different from each other, preferably equal to, and are C1 to C10 linear or branched hydrocarbyl, more preferably are equal to or different from each other, preferably equal to, and are C1 to C6 linear or branched alkyl,
$R^2$ to $R^6$ : are equal to or different from each other and are selected from the group consisting of hydrogen, linear saturated C1-C20 alkyl, linear unsaturated C1-C20 alkyl, branched saturated C1-C20 alkyl, branched unsaturated C1-C20 alkyl, C3-C20 cycloalkyl, C6-C20 aryl, C7-C20 alkylaryl, and C7-C20 arylalkyl, optionally containing one or more heteroatoms of groups 14 to 16 of the Periodic Table (IUPAC),

it is further preferred that $R^2$ to $R^6$ are equal to or different from each other and are C1 to C10 linear or branched hydrocarbyl, more preferably are equal to or different from each other and are C1 to C6 linear or branched alkyl,

$R^7$ and $R^8$: are equal to or different from each other and selected from the group consisting of hydrogen, linear saturated C1 to C20 alkyl, linear unsaturated C1 to C20 alkyl, branched saturated C1 to C20 alkyl, branched unsaturated C1 to C20 alkyl, C3 to C20 cycloalkyl, C6 to C20 aryl, C7 to C20 alkylaryl, C7 to C20 arylalkyl, optionally containing one or more heteroatoms of groups 14 to 16 of the Periodic Table (IUPAC), $SiR^{10}3$, $GeR^{10}_3$, $OR^{10}$, $SR^{10}$ and $NR^{10}_2$,

wherein

$R^{10}$ is selected from the group consisting of linear saturated C1-C20 alkyl, linear unsaturated C1 to C20 alkyl, branched saturated C1 to C20 alkyl, branched unsaturated C1 to C20 alkyl, C3 to C20 cycloalkyl, C6 to C20 aryl, C7 to C20 alkylaryl, and C7 to C20 arylalkyl, optionally containing one or more heteroatoms of groups 14 to 16 of the Periodic Table (IUPAC), and/or

$R^7$ and $R^8$ being optionally part of a C4 to C20 carbon ring system together with the indenyl carbons to which they are attached, preferably a C5 ring, optionally one carbon atom can be substituted by a nitrogen, sulfur or oxygen atom,

$R^9$ : are equal to or different from each other and are selected from the group consisting of hydrogen, linear saturated C1 to C20 alkyl, linear unsaturated C1 to C20 alkyl, branched saturated C1 to C20 alkyl, branched unsaturated C1 to C20 alkyl, C3 to C20 cycloalkyl, C6 to C20 aryl, C7 to C20 alkylaryl, C7 to C20 arylalkyl, OR<10>, and SR<10>, preferably $R^9$ are equal to or different from each other and are H or CH3,

wherein

$R^{10}$ is defined as before,

L : is a bivalent group bridging the two indenyl ligands, preferably being a $C2R^{11}_4$ unit or a $SiR^{11}_2$ or $GeR^{11}_2$, wherein,

$R^{11}$ is selected from the group consisting of H, linear saturated C1 to C20 alkyl, linear unsaturated C1 to C20 alkyl, branched saturated C1 to C20 alkyl, branched unsaturated

C1 to C20 alkyl, C3 to C20 cycloalkyl, C6 to C20 aryl, C7 to C20 alkylaryl or C7 to C20 arylalkyl, optionally containing one or more heteroatoms of groups 14 to 16 of the Periodic Table (IUPAC).

Preferably the transition metal compound of formula (IV) is C2-symmetric or pseudo-C2-symmetric. Concerning the definition of symmetry it is referred to Resconi et al. Chemical Reviews, 2000, Vol. 100, No. 4 1263 and references herein cited.

Preferably the residues $R^1$ are equal to or different from each other, more preferably equal, and are selected from the group consisting of linear saturated C1 to C10 alkyl, linear unsaturated C1 to C10 alkyl, branched saturated C1 to C10 alkyl, branched unsaturated C1 to C10 alkyl and C7 to C12 arylalkyl. Even more preferably the residues $R^1$ are equal to or different from each other, more preferably equal, and are selected from the group consisting of linear saturated C1 to C6 alkyl, linear unsaturated C1 to C6 alkyl, branched saturated C1 to C6 alkyl, branched unsaturated C1 to C6 alkyl and C7 to C10 arylalkyl. Yet more preferably the residues $R^1$ are equal to or different from each other, more preferably equal, and are selected from the group consisting of linear or branched C1 to C4 hydrocarbyl, such as for example methyl or ethyl.

Preferably the residues $R^2$ to $R^6$ are equal to or different from each other and linear saturated C1 to C4 alkyl or branched saturated C1 to C4 alkyl. Even more preferably the residues $R^2$ to $R^6$ are equal to or different from each other, more preferably equal, and are selected from the group consisting of methyl, ethyl, iso-propyl and tert-butyl.

Preferably $R^7$ and $R^8$ are equal to or different from each other and are selected from hydrogen and methyl, or they are part of a 5-methylene ring including the two indenyl ring carbons to which they are attached. In another preferred embodiment, $R^7$ is selected from OCH3 and OC2H5, and $R^8$ is tert-butyl.

A a further requirement the solid catalyst system (SCS) according to this invention must comprise a cocatalyst (Co) comprising an element (E) of group 13 of the periodic table (IUPAC), for instance the cocatalyst (Co) comprises a compound of Al.

Examples of such cocatalyst (Co) are organo aluminium compounds, such as aluminoxane compounds.

Such compounds of Al, preferably aluminoxanes, can be used as the only compound in the cocatalyst (Co) or together with other cocatalyst compound(s). Thus besides or in addition to the compounds of Al, i.e. the aluminoxanes, other cation complex forming cocatalyst compounds, like boron compounds can be used. Said cocatalysts are commercially available or can be prepared according to the prior art literature. Preferably however in the manufacture of the solid catalyst system only compounds of Al as cocatalyst (Co) are employed.

In particular preferred cocatalysts (Co) are the aluminoxanes, in particular the C1 to C10-alkylaluminoxanes, most particularly methylaluminoxane (MAO).

Preferably, the organo-zirconium compound of formula (IV) and the cocatalyst (Co) of the solid catalyst system (SCS) represent at least 70 wt.-%, more preferably at least 80 wt.-%, even more preferably at least 90 wt.-%, even further preferably at least 95 wt.-% of the solid catalyst system. Thus it is appreciated that the solid catalyst system is featured by the fact that it is self-supported, i.e. it does not comprise any catalytically inert support material, like for instance silica, alumina or MgCl2 or porous polymeric material, which is otherwise commonly used in heterogeneous catalyst systems, i.e. the catalyst is not supported on external support or carrier material. As a consequence of that the solid catalyst system (SCS) is self-supported and it has a rather low surface area.

In one embodiment the solid metallocene catalyst system (SCS) is obtained by the emulsion solidification technology, the basic principles of which are described in WO 03/051934.

Hence the solid catalyst system (SCS) is preferably in the form of solid catalyst particles, obtainable by a process comprising the steps of

a) preparing a solution of one or more catalyst components;

b) dispersing said solution in a second solvent to form an emulsion in which said one or more catalyst components are present in the droplets of the dispersed phase,

c) solidifying said dispersed phase to convert said droplets to solid particles and optionally recovering said particles to obtain said catalyst.

Preferably a first solvent, more preferably a first organic solvent, is used to form said solution. Still more preferably the organic solvent is selected from the group consisting of a linear alkane, cyclic alkane, aromatic hydrocarbon and halogen-containing hydrocarbon.

Moreover the second solvent forming the continuous phase is an inert solvent towards to catalyst components, The second solvent might be immiscible towards the solution of the catalyst components at least under the conditions (like temperature) during the dispersing step. The term "immiscible with the catalyst solution" means that the second solvent (continuous phase) is fully immiscible or partly immiscible i.e. not fully miscible with the dispersed phase solution.

Preferably the immiscible solvent comprises a fluorinated organic solvent and/or a functionalised derivative thereof, still more preferably the immiscible solvent comprises a semi-, highly- or perfluorinated hydrocarbon and/or a functionalised derivative thereof. It is in particular preferred, that said immiscible solvent comprises a perfluorohydrocarbon or a functionalised derivative thereof, preferably C3-C30 perfluoroalkanes, -alkenes or - cycloalkanes, more preferred C4-C10 perfluoro-alkanes, -alkenes or -cycloalkanes, particularly preferred perfluorohexane, perfluoroheptane, perfluorooctane or perfluoro (methylcyclohexane) or perfluoro (1,3- dimethylcyclohexane or a mixture thereof.

Furthermore it is preferred that the emulsion comprising said continuous phase and said dispersed phase is a bi-or multiphasic system as known in the art. An emulsifier may be used for forming and stabilising the emulsion. After the formation of the emulsion system, said catalyst is formed in situ from catalyst components in said solution.

In principle, the emulsifying agent may be any suitable agent which contributes to the formation and/or stabilization of the emulsion and which does not have any adverse effect on the catalytic activity of the catalyst. The emulsifying agent may e.g. be a surfactant based on hydrocarbons optionally interrupted with (a) heteroatom(s), preferably halogenated hydrocarbons optionally having a functional group, preferably semi-, highly- or perfluorinated hydrocarbons as known in the art. Alternatively, the emulsifying agent may be prepared during the emulsion preparation, e.g. by reacting a surfactant precursor with a compound of the catalyst solution. Said surfactant precursor may be a halogenated hydrocarbon with at least one functional group, e.g. a highly fluorinated Cl-n (suitably C4-30-or C5-15) alcohol (e.g. highly fluorinated heptanol, octanol or nonanol), oxide (e.g. propenoxide) or acrylate ester which reacts e.g. with a cocatalyst component, such as aluminoxane to form the "actual" surfactant.

In principle any solidification method can be used for forming the solid particles from the dispersed droplets. According to one preferable embodiment the solidification is effected by a temperature change treatment. Hence the emulsion subjected to gradual temperature change of up to 10 K/min, preferably 0.5 to 6 K/min and more preferably 1 to 5 K/min. Even more preferred the emulsion is subjected to a temperature change of more than 40 °C, preferably more than 50 °C within less than 10 seconds, preferably less than 6 seconds.

For further details, embodiments and examples of the continuous and dispersed phase system, emulsion formation method, emulsifying agent and solidification methods reference is made e.g. to the above cited international patent application WO 03/051934 .

All or part of the preparation steps can be done in a continuous manner. Reference is made to WO 2006/069733 describing principles of such a continuous or semicontinuous preparation methods of the solid catalyst types, prepared via emulsion/solidification method.

The above described catalyst components are prepared according to the methods described in WO 01/48034.

**Mechanical properties of the polypropylene composition:**

**Melt Flow Rate (MFR)**

The melt flow rate (MFR230/2.16) of the polypropylene composition of the present invention may be in the range of 12.0 - 75.0 g/10 min, preferably in the range of 15.0 - 50.0 g/10 min or 17.0 - 40.0 g/10 min, such as 19.0 - 31.0 g/10 min.

**Flexural Modulus**

The polypropylene composition of the present invention can be characterised by a low flexural modulus when measured according to ISO178 on test specimen 80*10*4 $mm^3$ (specimen type "B"). The polypropylene composition of the present invention can have a Flexural Modulus of at most 570 MPa or lower, such as 530 MPa or lower like 490 MPa or lower.

The Flexural Modulus of the polypropylene composition of the present invention can further be at least 200 MPa or higher, such as at least 250 or 300 MPa.

Preferably, the flexural Modulus may be in the range of 200 - 570 MPa, like 250 - 530 MPa or 300 - 490 MPa.

**Charpy Notched Impact Strength (NIS+23)**

The polypropylene composition of the present invention can be characterised by good impact behaviour in the sense of a high Charpy Notched impact strength determined according to ISO 179/1eA +23 °C (NIS+23).

The NIS+23 of the polypropylene composition of the present invention is at least 14.0 kJ/$m^2$ or higher, such as 15.5 kJ/$m^2$ or higher, or at least 17.0 kJ/$m^2$ or higher.

The NIS+23 may be up to 50.0 kJ/$m^2$, like up to 40.0 kJ/$m^2$, such as up to 30.0 kJ/$m^2$.

**Haze**

The polypropylene composition of the present invention can be further characterised by a low haze value when determined according to ASTM1003-D on 1 mm injection moulded plaques.

A haze value determined on 1 mm injection moulded plaques will be denominated as $Haze_1$.

The haze of the polypropylene composition of the present invention is at most 52.0% or lower, such as 46.0 % or 41.0 % or lower.

The Haze, of the polypropylene composition of the present invention may be at least 20.0 or higher, like 25.0 or higher.

The polypropylene composition of the present invention can be further characterised by both a high impact and low haze. Accordingly, the polypropylene composition of the present invention can be characterised by a NIS+23 of at least 14.0 kJ/$m^2$ or higher and a Haze, of 52.0 % or lower.

Seen from another point of view, the polypropylene composition of the present invention can by characterised by a ratio of (Haze, to NIS+23) of at most 4.0 or lower, such as at most 3.3 or lower, such as at most 2.7 or 2.4 or lower.

Seen from another point of view, the polypropylene composition of the present invention can by characterised by a weighted impact-haze ratio (WIH) of (NIS+23 to $Haze_1$) determined according to the formula below:

$$WIH: \quad \frac{(NIS\left[\frac{kJ}{m^2}\right])^2}{Haze_1\,[\%]} \geq 4.0 \qquad \text{(V)}$$

of at least 4.0 or higher, preferably 5.5 or higher, like 7.0 or 7.5 or higher. It is further preferred that the polypropylene composition of the present invention is characterised by both a low ratio of ($Haze_1$ to NIS+23) of at most 4.0 or lower and a high weighted impact-haze ratio (WIH) of at least 4.0.

**Optomechanical softness (OMS)**

Optomechanical softness (OMS) is understood as the ratio of mechanical (especially impact and soft-flexural) behaviour, to optical performance, namely haze, wherein the mechanical properties are targeted to be as high as possible and the optical performance is desired to be as low as possible.

The optomechanical softness is determined according the formula given below:

$$OMS = \frac{(1000 - Flex\ Modulus\ [MPa]) * NIS\left[\frac{kJ}{m^2}\right]}{Haze_1[\%]} \qquad \text{(I)}$$

The optomechanical softness of the polypropylene composition of the present invention can be at least 160 or higher, such as 190 or 210 or 230 or higher.

**Stress whitening - Onset Angle**

The polypropylene composition of the present invention is characterised by a pronounced stress whitening resistance. That means, final articles comprising the polypropylene composition of the present invention may undergo deformation and still maintain good optical appearance without getting white marks.

The polypropylene composition of the present invention will support more deformation than conventional materials known in the art. So the polypropylene composition of the present invention is characterised by a high onset

angle, before stress whitening can be detected.

The onset angle of the polypropylene composition of the present invention can be at least 52° or higher, like 54° or 56° or higher.

The polypropylene composition of the present invention is further characterised by a low residual size of the blushing zones immediately after a bending of 90°, [measured in mm], and a very low residual intensity of the blushing zone immediately after a bending of 90°.

In a specially preferred embodiment the polypropylene composition of the present invention can be characterised by a Charpy Impact Strength NIS+23 of at least 14.0 kJ/$m^2$ and any one or more of

- a Flexural Modulus of at most 570 MPa or lower,
- an optomechanical softness OMS of at least 160 or higher
- a $Haze_1$ of at most 52.0 % or lower,
- a ratio $Haze_1$/NIS+23 of at most 4.0 or lower,
- a weighted impact haze ratio (WIH) of at least 4.0 or higher or
- an onset angle of at least 52°.

In an equally preferred alternative embodiment the polypropylene composition of the present invention can be characterised by a Haze, of at most 52.0 % or lower and any one or more of

- a Charpy Impact Strength NIS+23 of at least 14.0 kJ/$m^2$,
- a Flexural Modulus of at most 570 MPa or lower,
- an optomechanical softness OMS of at least 160 (MPa*kJ)/(% $m^2$) or higher or
- a ratio $Haze_1$/NIS+23 of at most 4.0 or lower,
- a weighted impact-haze ratio (WIH) of at least 4.0 or higher,
- an onset angle of at least 52°.

In an equally preferred alternative embodiment the polypropylene composition of the present invention can be characterised by a Haze, of at most 52.0 % or lower and a Charpy Impact Strength NIS+23 of at least 14.0 kJ/$m^2$ and any one ore more of

- a Flexural Modulus of at most 570 MPa or lower,
- an optomechanical softness OMS of at least 160 (MPa*kJ)/(% $m^2$)or higher
- a ratio $Haze_1$/NIS+23 of at most 4.0 or lower,
- a weighted impact haze ratio (WIH) of at least 4.0 or higher,
- an onset angle of at least 52°.

**Final articles**

The polypropylene composition of the present invention is very suitable to produce injection moulded articles characterised by good optical properties in the sense of low haze, good impact behaviour and good haptics in the sense of soft touch and non-sticky surface.

The polypropylene composition of the present invention is very suitable for producing thin walled articles, characterised by an average wall thickness of at most 1.50 mm or below, such as 1.20 mm or below, like 0.90 or below. Alternatively the wall thickness may be at least 0.3 mm or higher, such as 0.5 mm or higher, like 0.70 mm or higher.

Preferably the polypropylene composition of the present invention can be used for producing thin walled articles having a wall thickness in the range of 0.30 - 1.5 mm, like 0.50 - 1.20 mm, like 0.70 - 0.9 mm.

The polypropylene composition of the present invention is very suitable for producing packaging articles in the field of food or alimentary packaging, for houseware or cosmetic packaging, or packaging in the medical, pharmaceutical or diagnostic field.

The polypropylene composition of the present invention is very suitable for producing cups, beakers, lids, covers, closures, bails, trays. etc.

The present invention will now be described in further detail by the examples provided below:

**Examples:**

**Measuring methods**

**Melt Flow Rate**

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The $MFR_2$ of polypropylene is determined at a temperature of 230 °C and a load of 2.16 kg.

**Density**

Density is measured according to ISO1183. Sample preparation is done by compression moulding in accordance with ISO 1873.

**Xylene Cold Soluble (XCS)**

Xylene Cold Soluble fraction at room temperature (XCS, wt.-%) is determined at 25 °C according to ISO 16152.

**Flexural Modulus**

The flexural modulus was determined in 3-point-bending at 23 °C according to ISO 178 on 80x10x4 $mm^3$ test bars injection moulded in line with EN ISO 1873-2.

**Notched impact strength (NIS+23):**

The Charpy notched impact strength (NIS+23) was measured according to ISO 179 1eA at +23 °C, using injection moulded bar test specimens of $80\times10\times4$ $mm^3$ prepared in accordance with EN ISO 1873-2.

**Haze**

Haze determined according to ASTM D1003-00 on $60\times60\times1$ $mm^3$ plaques injection moulded in line with EN ISO 1873-2. Haze, denominates a haze value determined on 1 mm thick plaques.

**Weighted Impact-haze ratio (WIH)**

The weighted impact-haze ratio (WIH) of (NIS+23 to $Haze_1$) is determined by squaring the value for Notched Impact strength and dividing it by the value for Haze (1mm plaques) according to the formula below:

$$\text{WIH:} \quad \frac{(NIS\left[\frac{kJ}{m^2}\right])^2}{Haze_1\,[\%]} \geq 4.0 \quad \text{(V)}$$

**Optomechanical softness (OMS)**

Optomechanical softness (OMS) is understood as the ratio of mechanical (especially impact and flexural) behaviour, to optical performance, namely haze, wherein the mechanical properties are targeted to be as high as possible and the optical performance is desired to be as low as possible.

The optomechanical softness is determined according the formula given below:

$$OMS = \frac{(1000 - Flex\ Modulus\ [MPa]) * NIS\left[\frac{kJ}{m^2}\right]}{Haze_1[\%]} \quad \text{(I)}$$

**Glass transition temperature (Tg)**

The glass transition temperature (Tg) is determined by dynamic mechanical thermal analysis according to ISO 6721-7. The measurements are done in torsion mode on compression moulded samples (40x10x1 mm3) between -100

°C and +150 °C with a heating rate of 2 K/min and a frequency of 1 Hz.

**Differential scanning calorimetry (DSC)**

Differential scanning calorimetry (DSC) analysis, melting temperature ($T_m$) and melt enthalpy ($H_m$), crystallization temperature ($T_c$), and heat of crystallization ($H_c$, $H_{CR}$) are measured with a TA Instrument Q200 differential scanning calorimetry (DSC) on 5 to 7 mg samples. DSC is run according to ISO 11357 / part 3 /method C2 in a heat / cool / heat cycle with a scan rate of 10 °C/min in the temperature range of -30 to +225 °C. Crystallization temperature ($T_c$) and heat of crystallization ($H_c$) are determined from the cooling step, while melting temperature ($T_m$) and melt enthalpy (Hm) are determined from the second heating step.
Throughout the patent the term Tc or (Tcr) is understood as Peak temperature of crystallization as determined by DSC at a cooling rate of 10 K/min.

**Stress whitening**

Stress whitening is determined by a modified three point bending test, namely the reversed three point bending test, (cf. Figure 1).
The reversed three point bending test is carried out on a universal testing machine (Zwick Z010) at 50 mm/min. The samples are 2 mm thick injection moulded UL94 specimens (125x12.5x2mm).
The experimental set-up consists of the reversed three point bending test coupled with an optical detection system.
The mechanical set up consists of:

a fix part (1), with a span (2) of 40 mm, a moving part including a loading edge (3) with a light source (4) and an optical sensor (5) fixed on the moving part closely above and
beneath the specimen (6) by a vertical rod. This ensures that the distance between light source and optical sensor remains constant during the test, which is a prerequisite for a good reproducibility of the measurements.

The force-deflection and the optical signal-deflection curves are recorded. At the beginning of the test, the optical signal (7) is calibrated to 100 % (7a), regardless of the initial transparency/haziness of the inserted sample.
Occurrence of stress whitening is correlated with a sharp drop in the optical signal-deflection curve (cf. Figure 2, reference 8 and further below).
Three different parameters are determined:

a) stress whitening angle,
b) residual size (width) of the blushing zones
c) stress whitening intensity
a) The stress whitening angle [°], (also: bending angle or onset-angle) indicates, at which bending angle stress whitening (SW) occurs. The occurrence of stress whitening is correlated with a sharp drop of the optical response (light transmission) during bending (cf. Figure 2,).

The onset angle for stress whitening is determined according to formula (VI):

$$\text{Onset angle} = \left(3*10^{-5}*s^4\right) - \left(2.1*10^{-3}*s^3\right) - \left(3.48*10^{-2}*s^2\right) + (6.4591*s) - 0.9997 \quad \text{(VI)}$$

wherein
"s" denominates the deflection of the loading edge, at which the light transmission curve drops and is determined as illustrated in Figure 2:
At the beginning of the test, the optical signal (7) is calibrated to 100 % (7a), regardless of the initial transparency/haziness of the inserted sample. The deflection of the loading edge (s), at which the in the light transmission curve drops is determined by the abscissa-value (8) of the intersection between the tangent of the slope of the optical signal (7b) and the 100 % line of the initial optical signal (7a)
b) Residual size (width) of the blushing zones immediately after a bending of 90°, measured in [mm], also denominated as "Res-SW 90°" or "residual stresswhitening"; The width of a blushing zone (b) is determined as follows:
Tests are conducted to a deflection corresponding to an angle of 90° according to the formula (VI) above. Then the specimen is abruptly unloaded with a crosshead speed of 400 mm/min. The width of the blushing area is measured immediately after testing using a slide gage. c) Stress whitening intensity: this is the residual intensity of the blushing

zone immediately after a bending of 90 deg. C (visual appreciation from 0 to 5, with 0: no remaining blush, 5: intensive whitening), also denominated as "SW-intensity".

Evaluation of the stress whitening intensity:

A mark of 0 is attributed when there is no residual blushing; a note of 5 when the whitening of the deformed zone is extremely pronounced. The obtained value is entered manually in a result sheet; average calculations are automated. The determination of these parameters is somewhat subjective and dependent on an operator. Although the obtained values are somewhat subjective they give essential information on the elastic recovery potential of the material.

What is important to notice, is:

a. an intensity of 0 is remarkably low (i.e. no blushing visible)
b. an intensity of up to 1 is excellent,
c. an intensity between 1.1 and 1.5 is good;
d. an intensity between 1.6 and 3 is acceptable;
e. an intensity higher than 3 is insufficient.

**GPC (Mw, Mn, MWD)**

Number average molecular weight (Mn), weight average molecular weight (Mw) and polydispersity (Mw/Mn) are determined by Gel Permeation Chromatography (GPC) according to the following method:
The weight average molecular weight Mw and the polydispersity (Mw/Mn, wherein Mn is the number average molecular weight and Mw is the weight average molecular weight) is measured by a method based on ISO 16014-1:2003 and ISO 16014-4:2003. A Waters Alliance GPCV 2000 instrument, equipped with refractive index detector and online viscometer was used with 3×TSK-gel columns (GMHXL-HT) from TosoHaas and 1,2,4-trichlorobenzene (TCB, stabilised with 200 mg/L 2,6-di tert butyl-4-methyl-phenol) as solvent at 145 °C and at a constant flow rate of 1 mL/min. 216.5 μL of sample solution were injected per analysis. The column set was calibrated using relative calibration with 19 narrow MWD polystyrene (PS) standards in the range of 0.5 kg/mol to 11 500 kg/mol and a set of well characterised broad polypropylene standards. All samples were prepared by dissolving 5-10 mg of polymer in 10 mL (at 160 °C) of stabilised TCB (same as mobile phase) and keeping for 3 hours with continuous shaking prior sampling in into the GPC instrument.

**Description of microstructure quantification by NMR spectroscopy**

Quantitative nuclear-magnetic resonance (NMR) spectroscopy was used to quantify the comonomer content of the polymers.

*Description: Poly(propylene-co-ethylene) - ethylene content - $^{13}C$ NMR spectroscopy* Quantitative $^{13}C\{^1H\}$ NMR spectra were recorded in the solution-state using a Bruker Avance III 400 NMR spectrometer operating at 400.15 and 100.62 MHz for $^1H$ and $^{13}C$ respectively. All spectra were recorded using a $^{13}C$ optimised 10 mm extended temperature probehead at 125 °C using nitrogen gas for all pneumatics. Approximately 200 mg of material was dissolved in 3 ml of *1,2*-tetrachloroethane-$d_2$ (TCE-$d_2$) along with chromium (III) acetylacetonate ($Cr(acac)_3$) resulting in a 65 mM solution of relaxation agent in solvent (Singh, G., Kothari, A., Gupta, V., Polymer Testing 28 5 (2009), 475). To ensure a homogenous solution, after initial sample preparation in a heat block, the NMR tube was further heated in a rotatory oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimised tip angle, 1 s recycle delay and a bi-level WALTZ16 decoupling scheme (Zhou, Z., Kuemmerle, R., Qiu, X., Redwine, D., Cong, R., Taha, A., Baugh, D. Winniford, B., J. Mag. Reson. 187 (2007) 225, Busico, V., Carbonniere, P., Cipullo, R., Pellecchia, R., Severn, J., Talarico, G., Macromol. Rapid Commun. 2007, 28, 1128). A total of 6144 (6k) transients were acquired per spectra.

Quantitative $^{13}C\{^1H\}$ NMR spectra were processed, integrated and relevant quantitative properties determined from the integrals. All chemical shifts were indirectly referenced to the central methylene group of the ethylene block (EEE) at 30.00 ppm using the chemical shift of the solvent. This approach allowed comparable referencing even when this structural unit was not present. Characteristic signals corresponding to the incorporation of ethylene were observed (Cheng, H. N., Macromolecules 17 (1984), 1950) and the comonomer fraction calculated as the fraction of ethylene in the polymer with respect to all monomer in the polymer: $fE = (E / (P + E )$ The comonomer fraction was quantified using the method of Wang et. al. (Wang, W-J., Zhu, S., Macromolecules 33 (2000), 1157) through integration of multiple signals across the whole spectral region in the $^{13}C\{^1H\}$ spectra. This method was chosen for its robust nature and ability to account for the presence of regio-defects when needed. The mole percent comonomer incorporation was calculated from the mole fraction:

$$E\ [mol\%] = 100 * fE.$$

The weight percent comonomer incorporation was calculated from the mole fraction:

$$E\ [wt.\text{-}\%] = 100 * ( fE * 28.06 ) / ( (fE * 28.06) + ((1-fE) * 42.08) )$$

*Poly(propylene-co-hexene) - hexene content - $^{13}C$ NMR spectroscopy*

Quantitative $^{13}C\{^1H\}$ NMR spectra recorded in the molten-state using a Bruker Avance III 500 NMR spectrometer operating at 500.13 and 125.76 MHz for $^1H$ and $^{13}C$ respectively. All spectra were recorded using a $^{13}C$ optimised 7 mm magic-angle spinning (MAS) probehead at 180 °C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification.(Klimke, K., Parkinson, M., Piel, C., Kaminsky, W., Spiess, H.W., Wilhelm, M., Macromol. Chem. Phys. 2006;207:382., Parkinson, M., Klimke, K., Spiess, H.W., Wilhelm, M., Macromol. Chem. Phys. 2007;208:2128., Castignolles, P., Graf, R., Parkinson, M., Wilhelm, M., Gaborieau, M., Polymer 50 (2009) 2373). Standard single-pulse excitation was employed utilising the NOE at short recycle delays of 3s (Klimke, K., Parkinson, M., Piel, C., Kaminsky, W., Spiess, H.W., Wilhelm, M., Macromol. Chem. Phys. 2006;207:382., Pollard, M., Klimke, K., Graf, R., Spiess, H.W., Wilhelm, M., Sperber, O., Piel, C., Kaminsky, W., Macromolecules 2004;37:813.). and the RS-HEPT decoupling scheme (Filip, X., Tripon, C., Filip, C., J. Mag. Resn. 2005, 176, 239., Griffin, J.M., Tripon, C., Samoson, A., Filip, C., and Brown, S.P., Mag. Res. in Chem. 2007 45, S1, S198). A total of 16384 (16k) transients were acquired per spectra.

Quantitative $^{13}C\{^1H\}$ NMR spectra were processed, integrated and relevant quantitative properties determined from the integrals. All chemical shifts are internally referenced to the methyl isotactic pentad (*mmmm*) at 21.85 ppm.

Characteristic signals corresponding to the incorporation of 1-hexene were observed and the comonomer content quantified in the following way.

The amount of 1-hexene incorporated in PHP isolated sequences was quantified using the integral of the αB4 sites at 44.2 ppm accounting for the number of reporting sites per comonomer:

$$H = I\alpha B4 / 2$$

The amount of 1-hexene incorporated in PHHP double consecutive sequences was quantified using the integral of the ααB4 site at 41.7 ppm accounting for the number of reporting sites per comonomer:

$$HH = 2 * I\alpha\alpha B4$$

When double consecutive incorporation was observed the amount of 1-hexene incorporated in PHP isolated sequences needed to be compensated due to the overlap of the signals αB4 and αB4B4 at 44.4 ppm:

$$H = (I\alpha B4 - 2 * I\alpha\alpha B4) / 2$$

The total 1-hexene content was calculated based on the sum of isolated and consecutively incorporated 1-hexene:

$$Htotal = H + HH$$

When no sites indicative of consecutive incorporation observed the total 1-hexeen comonomer content was calculated solely on this quantity:

$$Htotal = H$$

Characteristic signals indicative of regio 2,1-erythro defects were observed (Resconi, L., Cavallo, L., Fait, A.,

Piemontesi, F., Chem. Rev. 2000, 100, 1253).

The presence of 2,1-erythro regio defects was indicated by the presence of the Pαβ (21e8) and Pαγ (21e6) methyl sites at 17.7 and 17.2 ppm and confirmed by other characteristic signals.

The total amount of secondary (2,1-erythro) inserted propene was quantified based on the αα21e9 methylene site at 42.4 ppm:

$$P21 = I_{\alpha\alpha 21e9}$$

The total amount of primary (1,2) inserted propene was quantified based on the main Sαα methylene sites at 46.7 ppm and compensating for the relative amount of 2,1-erythro, αB4 and ααB4B4 methylene unit of propene not accounted for (note H and HH count number of hexene monomers per sequence not the number of sequences):

$$P12 = I_{S\alpha\alpha} + 2*P21 + H + HH / 2$$

The total amount of propene was quantified as the sum of primary (1,2) and secondary (2,1-erythro) inserted propene:

$$Ptotal = P12 + P21 = I_{S\alpha\alpha} + 3* I_{\alpha\alpha 21e9} + (I_{\alpha B4} - 2 * I_{\alpha\alpha B4}) / 2 + I_{\alpha\alpha B4}$$

This simplifies to:

$$Ptotal = I_{S\alpha\alpha} + 3* I_{\alpha\alpha 21e9} + 0.5*I_{\alpha B4}$$

The total mole fraction of 1-hexene in the polymer was then calculated as:

$$fH = Htotal / ( Htotal + Ptotal)$$

The full integral equation for the mole fraction of 1-hexene in the polymer was:

$$fH = (((I_{\alpha B4} - 2 * I_{\alpha\alpha B4}) / 2) + (2 * I_{\alpha\alpha B4})) /((I_{S\alpha\alpha} + 3* I_{\alpha\alpha 21e9} + 0.5*I_{\alpha B4} ) + ((I_{\alpha B4} - 2 * I_{\alpha\alpha B4}) / 2) + (2 * I_{\alpha\alpha B4}))$$

This simplifies to:

$$fH = (I_{\alpha B4}/2 + I_{\alpha\alpha B4}) / (I_{S\alpha\alpha} + 3* I_{\alpha\alpha 21e9} + I_{\alpha B4} + I_{\alpha\alpha B4})$$

The total comonomer incorporation of 1-hexene in mole percent was calculated from the mole fraction in the usual manner:

$$H [mol\%] = 100 * fH$$

The total comonomer incorporation of 1-hexene in weight percent was calculated from the mole fraction in the standard manner:

$$H [wt.-\%] = 100 * ( fH * 84.16) / ( (fH * 84.16) + ((1 - fH) * 42.08) )$$

**Material description:**

The first copolymer of the present invention has been produced in a Borstar PP pilot plant in a one-step polymerisation by polymerisation in a gas phase reactor.
Catalyst system MC1 is based on rac-cyclohexyl(methyl)silanediylbis [2-methyl-4-(4' - tert-butylphenyl)indenyl]zirconium dichloride

Preparation of catalyst system MC1

In a jacketed 90 $dm^3$ glasslined stainless steel reactor the complex solution was prepared at - 5 °C adding 0.85 kg of a 24,5 wt.-% PFPO ((2,2,3,3,4,4,5,5,6,6,7,7,8,8,9,9,9-heptadecafluorononyl)oxirane)/toluene solution very slowly (3.4 ml/min) to 13.5 kg 30wt.-% MAO(methylaluminoxane)/toluene solution. The temperature was increased to 25 °C and the solution was stirred for 60 minutes. After addition of 210 g of the complex the solution was stirred for an additional two hours. That mixture was pumped at 5 l/h to the rotor stator with the rotor stator pair 4M. In the rotor stator with a tip speed of 4 m/s the mixture was mixed with a flow of 32 1/h of PFC (hexadecafluoro-1,3-dimethylcyclohexane) thus forming an emulsion. The droplets in the emulsion were solidified by an excess flow of 450 l/h PFC at a temperature of 76 °C in a Teflon hose. The hose was connected to a jacketed 160 $dm^3$ stainless steel reactor equipped with a helical mixing element. In this reactor the catalyst particles were separated from the PFC by density difference. After the complex solution had been utilised the catalyst particles were dried in the 160 dm reactor at a temperature of 70 °C and a nitrogen flow of 5 kg/h for 7 h. Porosity and surface area below the detection limit.

Mol ratio Co/M (Al/Zr):260 mol/mol; mean particle size: 26 μm;
Zr content: 0.53 wt.-%
Al content: 34.5 wt.-%

Preparation of catalyst composition MC1

15 mL of perfluoro-1,3-dimethylcyclohexane (PFC) and 253.8 mg of the catalyst system were taken into a 125-mL stainless steel reactor. Reactor was thermostated to 30 °C and 1.5 mmol of hydrogen was added. Stirring was set to 450 rpm. Polymerisation was initiated by addition of propylene (ca 4.6 bar partial pressure). During the polymerisation the total pressure was kept at 5.0 bar. The reaction was continued for 15 min after which the reactor was degassed and flushed repeatedly with nitrogen. After evaporation of the PFC the weight increase of the catalyst (0.78 g) was calculated to correspond to the polymerisation degree: 0.78 g/0.2538 g = 3.1 g polymer/1.0 g cat. The solid catalyst composition was a freely flowable powder.

Polymerisation of P1:

A stirred autoclave (equipped with a ribbon stirrer) with a total volume of 20.9 $dm^3$ containing 0.2 bar-g propylene is filled with additional 4.45 kg propylene and a chosen amount of 1-hexene. After addition of 0.8 ml triethylaluminium solution (0.62 molar solution in n-heptane) using a stream of 250 g propylene. The solution is stirred at 20 °C and 250 rpm for at least 20 min. Afterwards the reactor is brought up to the set prepolymerization temperature (HB-Therm) and the catalyst is injected as described in the following.
The solid, pre-polymerized catalyst (type and amount as listed in the tables) is loaded into a 5-mL stainless steel vial inside the glove box. The vial is attached to the autoclave, then a second 5-mL vial containing 4 ml n-heptane and pressurized with 10 bars of N2 is added on top. The chosen amount of H2 is dosed into the reactor via flow controller. The valve between the two vials is opened and the solid catalyst is contacted with heptane under N2 pressure for 2 s, and then flushed into the reactor with 250 g propylene. Stirring speed is held at 250 rpm and pre-polymerisation is run for the set time. Now the polymerisation temperature is increased to 75 °C. The reactor temperature is held constant throughout the polymerization. The polymerization time is measured starting when the temperature is 2 °C below the set polymerization temperature. When the polymerization time 60 min has lapsed, the reaction is stopped by injecting 5 ml ethanol, cooling the reactor and flashing the volatile components. After flushing the reactor 3 times with N2 and one vacuum/N2 cycle, the product is taken out and dried overnight in a hood. 50 - 100 g of the polymer is additivated with 0.2 wt.-% Ionol and 0.1 wt.-% PEPQ (dissolved in acetone) and dried also overnight in a hood and additionally 2 hours in a vacuum drying oven at 60 °C.
**Table** 1 shows the basic properties of base polymers.
P1 is a high flow copolymer of propylene and 1-hexene with a 1-hexene content of about 3.0 wt.-%, polymerised in the presence of MC1 as described above. It is used as a base polymer for inventive example IE1.
P2 is a Ziegler-Natta-catalyst based random copolymer of propylene and ethylene. It is commercially available

as RG466MO by Borealis Polyolefine.

Vistamax 6202 (also: VM 6202) is a propylene based elastomer having 15 % ethylene, MFR230/2.16 of about 20 g/10 min and a density of 861 kg/m$^3$. Vistamaxx is commercially available from Exxon Mobil.

All products were stabilized with 0.15 wt.-% of Irganox B225 (1:1-blend of Irganox 1010 and Irgafos 168) commercially available of BASF AG, Germany and 0.05 wt.-% calcium stearate.

The mixture of polymer and additives was then extruded to pellets by using a PRISM TSE 16, extruder, having an L/D ratio of the screw of 25, under nitrogen atmosphere and final polymer properties were measured.

**Table 1**: Polymer properties

| | units | **P1** | **P2** |
|---|---|---|---|
| Catalyst | | MC1 | ZN |
| MFR | g/10min | 24 | 30 |
| C6 | wt.-% | 2.97 | - |
| C2 | | - | 3.7 |
| XCS | wt.-% | 0.53 | 10 |
| Tc | °C | 97 | 103 |
| Tm | °C | 133 | 145 |
| Hm | °C | 75 | 79 |
| Mn | Kg/mol | 70.4 | 51.7 |
| Mw | Kg/mol | 162 | 248 |
| Mw/Mn | Kg/mol | 2.3 | 4.8 |

**Table 2:** Mechanical Performance of the inventive and comparative example

| | units | **IE1** | **CE1** | **P1** | **P2** |
|---|---|---|---|---|---|
| P1 | wt.-% | 74.8 | - | 100 | - |
| P2 | wt.-% | - | 64.8 | - | 100 |
| VM6202 | wt.-% | 25 | 35 | - | - |
| MFR | g/10min | 21 | 25 | 24 | 30 |
| Tc | °C | 98 | 99 | 97 | 103 |
| Tm | °C | 134 | 142 | 133 | 145 |
| Hm | J/g | 57 | 62 | 75 | 79 |
| Charpy NIS +23 °C | kJ/m$^2$ | 17.8 | 13.3 | 4.2 | 5.5 |
| Flexural modulus | MPa | 465 | 408 | 620 | 1050 |
| Haze (1mm) | % | 39 | 54 | 20 | 12 |
| OMS | (MPa*kJ)/(%*m$^2$) | 244 | 146 | 80 | -23 |
| Onset angle | ° | 56 | 51 | n.d. | n.d. |
| Residual Size of blushing<br>Stress whitening Intensity | n.d.<br>n.d. | 0<br>0 | 0<br>0 | n.d.<br>n.d. | n.d.<br>n.d. |
| Ratio (Haze$_1$/NIS+23) | % / kJ/m$^2$ | 2.2 | 4.1 | 4.8 | 2.1 |
| Weighted impact-haze WIH: Charpy$^2$ / Haze, | (kJ/m$^2$)$^2$/% | 8.1 | 3.3 | 0.9 | 2.5 |

The data in **Table 2** clearly show, that the inventive example has good impact strength, low haze and a high onset angle for stress whitening. It is further characterised by a low ratio of Haze, to impact strength, as well as low

flexural modulus.

The polypropylene composition of the present invention is further characterised by a good optomechanical softness and a high weighted ratio (WIH) between Charpy Notched Impact strength and Haze. It is also evidenced that good impact behaviour can be achieved by applying lower amounts of rubber.

The data provided show that the object of the present invention is clearly fulfilled.

## Claims

1. Polypropylene composition having a Melt Flow Rate (MFR 230/2.16) when measured according to ISO1133 of at least 12.0 - 75.0 g/10 min and comprising

   a. 65.0 - 85.0 wt.-% of a first copolymer of propylene and 2.0 - 5.0 wt.-% of a first comonomer (Como1) selected from C4 - C12 alpha olefins, and
   b. 15.0 - 35.0 wt.-% of a second copolymer of propylene and 5.0 - 25.0 wt.-% ethylene as a second comonomer,

   wherein the MFR of the second copolymer (b) is lower than the MFR of the first copolymer (a).

2. Polypropylene composition according to claim 1, wherein the first copolymer is a random copolymer.

3. Polypropylene composition according to any of the preceding claims, wherein the first comonomer is selected from 1-butene or 1-hexene.

4. Polypropylene composition according to any of the preceding claims, wherein the second copolymer (b) is **characterised by** an ethylene content of 5.0 - 25.0 wt.-%, and a density according to ISO1183 of 850 - 890 kg/$m^3$.

5. Polypropylene composition according to any of the preceding claims, wherein the second copolymer (b) is **characterised by** a molecular weight distribution (MWD) of at most 5.0 and a glass transition temperature (Tg) in the range of - 45 °C to - 5 °C.

6. Polypropylene composition according to any of the preceding claims, wherein the polypropylene composition has a Haze determined according to ASTM1003 on 1 mm injection moulded plaques of at most 52.0 %.

7. Polypropylene composition according to any of the preceding claims, wherein the polypropylene composition has a Charpy Notched Impact Strength (NIS+23) when measured according to ISO 179/1eA of at least 14.0 kJ/$m^2$.

8. Polypropylene composition according to any of the preceding claims, wherein the polypropylene composition has a Flexural Modulus of at most 570 MPa when measured according to ISO 178.

9. Polypropylene composition according to any of the preceding claims, wherein the polypropylene composition has a ratio between $Haze_1$ and Charpy Notched Impact Strength ($Haze_1$/NIS+23) of at most 4.0 or a weighted impact-haze ratio (WIH) of at least 4.0, $Haze_1$ is the Haze determined according to ASTM D1003-00 on 1 mm thick plaques, the Charpy Notched Impact Strength (NIS+23) is measured according to ISO 179/1eA, and the weighted impact-haze ratio (WIH) is $(NIS+23)^2/Haze_1$.

10. Polypropylene composition according to any of the preceding claims, wherein the polypropylene composition has a optomechanical softness (OMS) of at least 160 (MPa*kJ)/(%*$m^2$), determined according to formula (I):

$$OMS = \frac{(1000 - Flex\ Modulus\ [MPa]) * NIS\left[\frac{kJ}{m^2}\right]}{Haze_1[\%]} \quad (I)$$

   wherein

   Flex Modulus is the Flexural Modulus measured according to ISO 178, NIS is the Charpy Notched Impact Strength (NIS+23) measured according to ISO 179/1eA, and
   $Haze_1$ is the Haze determined according to ASTM D1003-00 on 1 mm thick plaques.

11. Polypropylene composition according to any of the preceding claims, wherein the polypropylene composition has a stress whitening onset angle, determined as described in the description, of at least 52° or above.

12. Polypropylene composition according to any of the preceding claims, wherein the first copolymer of propylene and a first comonomer is **characterised by** a Molecular Weight Distribution (MWD) of at most 5.0.

13. Polypropylene composition according to any of the preceding claims, wherein the second copolymer of propylene and ethylene is **characterised by** a Molecular Weight Distribution (MWD) of at most 5.0.

14. Moulded article comprising the polypropylene composition according to any of the preceding claims.

15. Use of the polypropylene composition according to any of the preceding claims for producing injection moulded articles.

## Patentansprüche

1. Polypropylenzusammensetzung mit einem Schmelzindex (MFR 230/2,16), gemessen gemäß IS01133, von mindestens 12,0 - 75,0 g/10 min und umfassend

   a. 65.0 - 85,0 Gew.-% eines ersten Copolymers aus Propylen und 2,0 - 5,0 Gew.-% eines ersten Comonomers (Comol), ausgewählt aus C4 - C12-alpha-Olefinen, und
   b. 15.0 - 35,0 Gew.-% eines zweiten Copolymers aus Propylen und 5,0 - 25,0 Gew.-% Ethylen als zweites Comonomer,

   wobei der MFR des zweiten Copolymers (b) niedriger ist als der MFR des ersten Copolymers (a).

2. Polypropylenzusammensetzung nach Anspruch 1, wobei das erste Copolymer ein statistisches Copolymer ist.

3. Polypropylenzusammensetzung nach einem der vorhergehenden Ansprüche, wobei das erste Comonomer ausgewählt ist aus 1-Buten oder 1-Hexen.

4. Polypropylenzusammensetzung nach einem der vorhergehenden Ansprüche, wobei das zweite Copolymer (b) **gekennzeichnet ist durch** einen Ethylengehalt von 5,0 - 25,0 Gew.-% und eine Dichte gemäß IS01183 von 850 - 890 $kg/m^3$.

5. Polypropylenzusammensetzung nach einem der vorhergehenden Ansprüche, wobei das zweite Copolymer (b) **gekennzeichnet ist durch** eine Molekulargewichtsverteilung (MWD) von höchstens 5,0 und eine Glasübergangstemperatur (Tg) im Bereich von -45°C bis -5 °C.

6. Polypropylenzusammensetzung nach einem der vorangehenden Ansprüche, wobei die Polypropylenzusammensetzung eine Trübung, bestimmt gemäß ASTM1003 an 1 mm spritzgegossenen Platten, von höchstens 52,0 % aufweist.

7. Polypropylenzusammensetzung nach einem der vorhergehenden Ansprüche, wobei die Polypropylenzusammensetzung eine Charpy-Kerbschlagzähigkeit (NIS+23), wenn gemessen gemäß ISO 179/1eA, von mindestens 14,0 $kJ/m^2$ aufweist.

8. Polypropylenzusammensetzung nach einem der vorangehenden Ansprüche, wobei die Polypropylenzusammensetzung einen Biegemodul von höchstens 570 MPa aufweist, wenn gemessen nach ISO 178.

9. Polypropylenzusammensetzung nach einem der vorhergehenden Ansprüche, wobei die Polypropylenzusammensetzung ein Verhältnis zwischen $Trübung_1$ und Charpy-Kerbschlagzähigkeit ($Trübung_1$/NIS+23) von höchstens 4,0 oder ein gewichtetes Schlag-Trübungs-Verhältnis (WIH) von mindestens 4,0 aufweist, wobei $Trübung_1$ die gemäß ASTM D1003-00 an 1 mm dicken Platten bestimmte Trübung ist, die Charpy-Kerbschlagzähigkeit (NIS+23) gemäß ISO 179/1eA gemessen ist und das gewichtete Schlag-Trübungs-Verhältnis (WIH) $(NIS+23)^2/Trübung_1$ ist.

10. Polypropylenzusammensetzung nach einem der vorhergehenden Ansprüche, wobei die Polypropylenzusammensetzung eine optomechanische Weichheit (OMS) von mindestens 160 (MPa*kJ)/(%*m$^2$) aufweist, bestimmt gemäß der Formel (I):

$$OMS = \frac{(1000 - Biegemodul\,[MPa]) * NIS\left[\frac{kJ}{m^2}\right]}{Trübung_1[\%]} \quad (I)$$

wobei

Biegemodul der gemäß ISO 178 gemessene Biegemodul ist,
NIS die gemäß ISO 179/1eA gemessene Charpy-Kerbschlagzähigkeit (NIS+23) ist und
$Trübung_1$ die gemäß ASTM D1003-00 an 1 mm dicken Platten bestimmte Trübung ist.

**11.** Polypropylenzusammensetzung nach einem der vorhergehenden Ansprüche, wobei die Polypropylenzusammensetzung einen Weißbruch-Anfangswinkel, bestimmt wie in der Beschreibung beschrieben, von mindestens 52° oder mehr aufweist.

**12.** Polypropylenzusammensetzung nach einem der vorhergehenden Ansprüche, wobei das erste Copolymer aus Propylen und einem ersten Comonomer **gekennzeichnet ist durch** eine Molekulargewichtsverteilung (MWD) von höchstens 5,0.

**13.** Polypropylenzusammensetzung nach einem der vorhergehenden Ansprüche, wobei das zweite Copolymer aus Propylen und Ethylen **gekennzeichnet ist durch** eine Molekulargewichtsverteilung (MWD) von höchstens 5,0.

**14.** Formkörper, umfassend die Polypropylenzusammensetzung nach einem der vorangehenden Ansprüche.

**15.** Verwendung der Polypropylenzusammensetzung nach einem der vorhergehenden Ansprüche zur Herstellung von Spritzgussartikeln.

## Revendications

**1.** Composition de polypropylène ayant un indice de fluage (MFR 230/2,16), lorsqu'il est mesuré conformément à la norme ISO 1133, d'au moins 12,0 à 75,0 g/10 min, et comprenant

a. 65,0 à 85,0 % en poids d'un premier copolymère de propylène et de 2,0 à 5,0 % en poids d'un premier comonomère (Como1) choisi parmi les alpha-oléfines en C4 à C12, et
b. 15,0 à 35,0 % en poids d'un deuxième copolymère de propylène et de 5,0 à 25,0 % en poids d'éthylène en tant que deuxième comonomère,

dans laquelle le MFR du deuxième copolymère (b) est inférieur au MFR du premier copolymère (a).

**2.** Composition de polypropylène selon la revendication 1, dans laquelle le premier copolymère est un copolymère aléatoire.

**3.** Composition de polypropylène selon l'une quelconque des revendications précédentes, dans laquelle le premier comonomère est choisi parmi le 1-butène et le 1-hexène.

**4.** Composition de polypropylène selon l'une quelconque des revendications précédentes, dans laquelle le deuxième copolymère (b) est **caractérisé par** une teneur en éthylène de 5,0 à 25,0 % en poids et une masse volumique, conformément à la norme ISO 1183, de 850 à 890 kg/m$^3$.

**5.** Composition de polypropylène selon l'une quelconque des revendications précédentes, dans laquelle le deuxième copolymère (b) est **caractérisé par** une distribution des masses moléculaires (MWD) d'au plus 5,0 et une température de transition vitreuse (Tg) dans la plage de -45°C à -5°C.

**6.** Composition de polypropylène selon l'une quelconque des revendications précédentes, dans laquelle la composition de polypropylène a un voile, déterminé conformément à la norme ASTM 1003 sur des plaques moulées par injection

de 1 mm, d'au plus 52,0 %.

**7.** Composition de polypropylène selon l'une quelconque des revendications précédentes, dans laquelle la composition de polypropylène a une résistance au choc Charpy sur barreau entaillé (NIS+23), quand elle est mesurée conformément à la norme ISO 179/1eA, d'au moins 14,0 $kJ/m^2$.

**8.** Composition de polypropylène selon l'une quelconque des revendications précédentes, dans laquelle la composition de polypropylène a un module de flexion d'au plus 570 MPa quand il est mesuré conformément à la norme ISO 178.

**9.** Composition de polypropylène selon l'une quelconque des revendications précédentes, dans laquelle la composition de polypropylène a un rapport entre le $voile_1$ et la résistance au choc Charpy sur barreau entaillé ($voile_1$/NIS+23) d'au plus 4,0 ou un rapport choc-voile pondéré (WIH) d'au moins 4,0, voile, est le voile déterminé conformément à la norme ASTM D1003-00 sur des plaques ayant une épaisseur de 1 mm, la résistance au choc Charpy sur barreau entaillé (NIS+23) est mesurée conformément à la norme ISO 179/1eA, et le rapport choc-voile pondéré (WIH) est $(NIS+23)^2/voile_1$.

**10.** Composition de polypropylène selon l'une quelconque des revendications précédentes, dans laquelle la composition de polypropylène a une souplesse optomécanique (OMS) d'au moins 160 (MPa*kJ)/(%*$m^2$), déterminée conformément à la formule I :

$$OMS = \frac{(1000 - \text{module de flexion [MPa]}) * NIS\left[\frac{kJ}{m^2}\right]}{voile_1\ [\%]} \quad (I)$$

dans laquelle

"module de flexion" est le module de flexion mesuré conformément à la norme ISO 178,
"NIS" est la résistance au choc Charpy sur barreau entaillé (NIS+23) mesuré conformément à la norme ISO 179/1eA, et
"$voile_1$" est le voile déterminé conformément à la norme ASTM D1003-00 sur des plaques ayant une épaisseur de 1 mm.

**11.** Composition de polypropylène selon l'une quelconque des revendications précédentes, dans laquelle la composition de polypropylène a un angle d'apparition de blanchiment sous contrainte, déterminé comme décrit dans la description, d'au moins 52° ou plus.

**12.** Composition de polypropylène selon l'une quelconque des revendications précédentes, dans laquelle le premier copolymère de propylène et d'un premier comonomère est **caractérisé par** une distribution des masses moléculaires (MWD) d'au plus 5,0.

**13.** Composition de polypropylène selon l'une quelconque des revendications précédentes, dans laquelle le deuxième copolymère de propylène et d'éthylène est **caractérisé par** une distribution des masses moléculaires (MWD) d'au plus 5,0.

**14.** Article moulé comprenant la composition de polypropylène selon l'une quelconque des revendications précédentes.

**15.** Utilisation de la composition de polypropylène selon l'une quelconque des revendications précédentes pour produire des articles moulés par injection.

Figure 1: schematic representation of experimental set up for stress whitening measurement

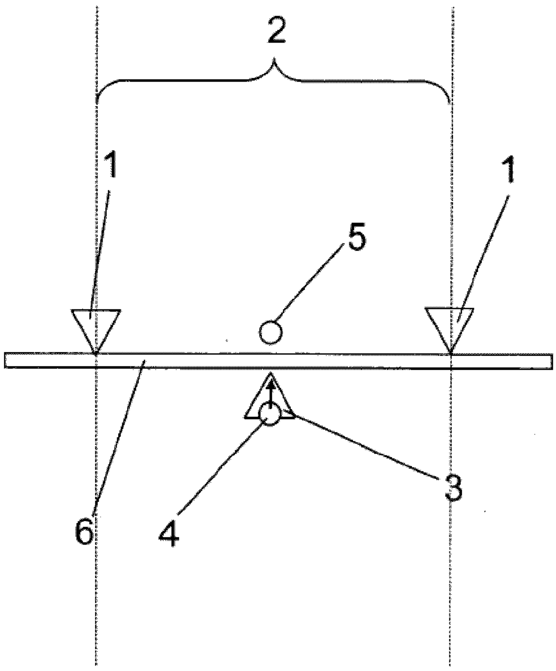


**Figure 2: schematic diagram of the function recorded during stress whitening experiment**

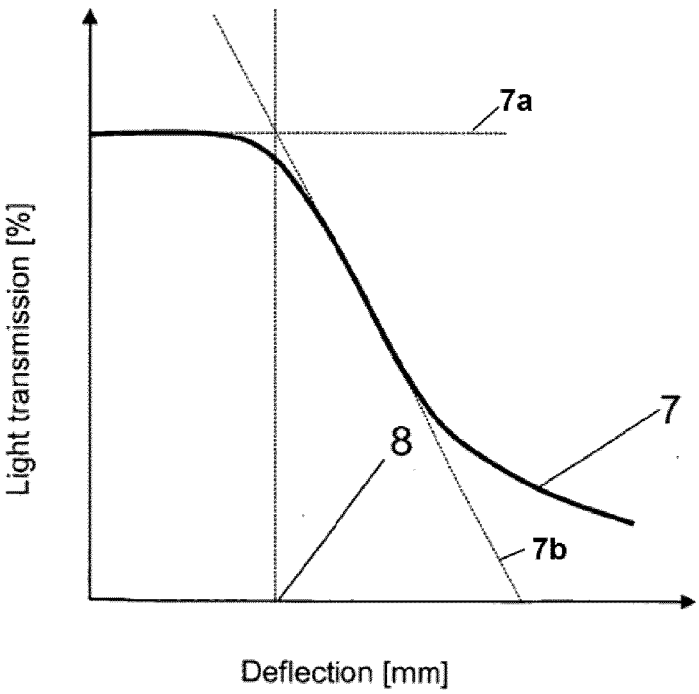

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20060178483 A
- US 20040087751 A
- EP 1889873 A
- EP 2586824 A
- WO 03051934 A
- WO 2006069733 A
- WO 0148034 A


### Non-patent literature cited in the description


- *Pure Appl. Chem.,* 1996, vol. 68 (8), 1591-1595
- **RESCONI et al.** *Chemical Reviews,* 2000, vol. 100 (4), 1263
- **ZHOU, Z. ; KUEMMERLE, R. ; QIU, X. ; REDWINE, D. ; CONG, R. ; TAHA, A. ; BAUGH, D. ; WINNIFORD, B.** *J. Mag. Reson.,* 2007, vol. 187, 225
- **BUSICO, V. ; CARBONNIERE, P. ; CIPULLO, R. ; PELLECCHIA, R. ; SEVERN, J. ; TALARICO, G.** 28. *Macromol. Rapid Commun.,* 2007, 1128
- **CHENG, H. N.** *Macromolecules,* 1984, vol. 17, 1950
- **WANG, W-J. ; ZHU, S.** *Macromolecules,* 2000, vol. 33, 1157
- **KLIMKE, K. ; PARKINSON, M. ; PIEL, C. ; KAMINSKY, W. ; SPIESS, H.W. ; WILHELM, M.** *Macromol. Chem. Phys.,* 2006, vol. 207, 382
- **PARKINSON, M. ; KLIMKE, K. ; SPIESS, H.W. ; WILHELM, M.** *Macromol. Chem. Phys.,* 2007, vol. 208, 2128
- **CASTIGNOLLES, P. ; GRAF, R. ; PARKINSON, M. ; WILHELM, M. ; GABORIEAU, M.** *Polymer,* 2009, vol. 50, 2373
- **POLLARD, M. ; KLIMKE, K. ; GRAF, R. ; SPIESS, H.W. ; WILHELM, M. ; SPERBER, O. ; PIEL, C. ; KAMINSKY, W.** *Macromolecules,* 2004, vol. 37, 813
- **FILIP, X. ; TRIPON, C. ; FILIP, C.** *J. Mag. Resn.,* 2005, vol. 176, 239
- **GRIFFIN, J.M. ; TRIPON, C. ; SAMOSON, A. ; FILIP, C. ; BROWN, S.P.** *Mag. Res. in Chem.,* 2007, vol. 45
- **RESCONI, L. ; CAVALLO, L. ; FAIT, A. ; PIEMONTESI, F.** *Chem. Rev.,* 2000, vol. 100, 1253